# DEMANDE DE BREVET EUROPEEN

(11) **EP 4 091 729 A1**
(43) Date de publication de la demande: **23.11.2022**
(21) Numéro de dépôt: 22174611.8
(22) Date de dépôt: 20.05.2022
(51) Int. Cl.: B09B 3/24, B09B 3/25, B09B 3/29, B09B 3/32, B09B 3/35, B09B 3/38, B29B 17/00, C04B 18/02, C04B 18/16, C04B 18/20, C04B 22/00, C04B 30/02, B09B 101/45, B09B 101/50, B09B 101/75, B29B 17/02, B29K 105/06, B29K 309/08

(54) **COMPOSITION POUR LA FABRICATION D'UN MATÉRIAU RECYCLABLE**

(30) Priorité: 21.05.2021 FR 2105341
(71) Demandeur: WeGreenCity Ingénierie, 45074 Orléans Cedex 2 (FR)
(72) Inventeur: LIGEARD, Paul, 98809 Le Mont Dore (NC); SEVIN, Xavier, 98800 Noumea (NC)
(74) Mandataire: Aquinov

(57) **Abrégé**

L'invention concerne une composition pour la fabrication d'un matériau recyclable destiné notamment à la construction et/ou à l'aménagement constitué d'un mélange de matériaux recyclés comprenant des matériaux plastiques, des agrégats et de la laine de verre.

## Description

La présente invention concerne le domaine technique des compositions pour la fabrication d'un matériau recyclable notamment destiné à la construction et/ou à l'aménagement.

Dans le domaine ci-dessus, il est connu des matériaux composites comprenant un mélange d'agrégats ou de matériaux plastiques associés à des fibres de verre qui renforcent la structure du matériau.

L'invention vise à utiliser des agrégats et/ou des matériaux plastiques et de la laine de verre recyclés. La laine recyclée est apte à être intégrée dans le matériau sous forme de fibres. Par exemple, la laine de verre utilisée pour la conception du matériau selon l'invention est issue de rebuts de chantier.

Or, de tels fibres de laine de verre pour être utilisées dans la fabrication de matériaux destinés à la construction et/ à l'aménagement ne doivent pas être polluées ni gorgées d'eau. Il existe en effet de nombreuses normes à valider pour l'utilisation de matériaux composites dans le domaine de la construction.

Des pollutions organiques de type huiles, carburants, papier, autres plastiques ou encore film aluminium sont admissibles dans une proportion massique inférieure à environ 1% selon le type de pollution et à la condition d'être non toxiques.

Les fibres de laine recyclées peuvent être issues du broyage ou de la coupe des matériaux fibreux, de type panneaux ou autres pièces de laine solidifiée par un agglomérant ou encore issues de laines en vrac. Les fibres de laine de verre peuvent également contenir des particules non fibreuses issues de l'attrition ou de procédés de broyage.

L'invention présente, d'une part, l'avantage d'utiliser des matériaux recyclés, et d'autre part, de former une composition qui sera elle-même recyclable.

A cet effet, l'invention concerne une composition pour la fabrication d'un matériau recyclable destiné notamment à la construction et/ou à l'aménagement constitué d'un mélange de matériaux recyclés comprenant des matériaux plastiques, des agrégats et de la laine de verre.

Selon une caractéristique de l'invention, les matériaux plastiques comprennent du Polyéthylène Basse Densité (PELD), du Polyéthylène Haute Densité (PEHD)et les agrégats comprennent du verre broyé et/ou du béton broyé.

Selon une variante de réalisation de l'invention, les matériaux plastiques comprennent en outre du Polypropylène (PP).

Selon une caractéristique de l'invention, la laine de verre comprend des fibres de laine de verre de dimension inférieure à 5mm.

Selon une autre caractéristique de l'invention, les agrégats comprennent du verre broyé et/ou du béton broyé dont chaque morceau est de dimension inférieure à 4mm.

Selon une forme de réalisation de l'invention, le pourcentage de matériaux plastiques est compris entre 25 et 35% en poids de masse totale et le pourcentage de laine de verre est compris entre 0 et 6% en poids de masse totale.

Selon une forme de réalisation de l'invention, le pourcentage de Polyéthylène Basse Densité est environ de 10% en poids de masse totale, le pourcentage de Polyéthylène Haute Densité est environ de 10% en poids de masse totale, le pourcentage de Polypropylène est environ de 8% en poids de masse totale, le pourcentage béton broyé et/ou de verre broyé est environ de 70% en poids de masse totale et le pourcentage de laine de verre est environ de 2% en poids de masse totale.

Selon une variante de réalisation de l'invention, le pourcentage de Polyéthylène Basse Densité est environ de 20% en poids de masse totale, le pourcentage de Polyéthylène Haute Densité est environ de 10% en poids de masse totale, le pourcentage de Polypropylène est de 0% en poids de masse totale, le pourcentage béton broyé et/ou de verre broyé est compris entre 64 et 68% en poids de masse totale et le pourcentage de laine de verre est compris entre 2 et 6% en poids de masse totale.

L'invention concerne également un procédé de fabrication d'une composition selon l'invention comprenant les étapes suivantes :
- Tri des matières issues du recyclage destinées à la composition,
- Broyage de la laine de verre afin d'obtenir des fibres de laine de verre de dimension inférieure à 5 mm, et
- Malaxage et séchage des matériaux plastiques et des agrégats comprenant les fibres de laine de verre.

Un avantage du procédé est qu'il ne nécessite pas un tri et un nettoyage poussé des laines de verre en entrée. En effet, un tri et un nettoyage sommaire sont suffisants.

L'invention concerne en outre une utilisation de la composition selon l'invention pour la fabrication de matériaux recyclés destinés notamment à la construction et/ou à l'aménagement.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

De plus, diverses autres caractéristiques de l'invention ressortent de la description annexée effectuée en référence aux dessins qui illustrent des formes, non limitatives, de réalisation de l'invention et où :
[Fig. 1] est une vue d'un exemple d'une extrudeuse apte à malaxer la composition selon l'invention, et
[Fig.2] est une vue en perspective du dessous d'un exemple de dalle en matériaux recyclés obtenue à partie d'une composition selon l'invention.

Il est à noter que sur ces figures, les éléments structurels et/ou fonctionnels communs aux différentes variantes peuvent présenter les mêmes références.

Afin d'obtenir des matériaux recyclés aptes à être utilisés dans le domaine de la construction ou de l'aménagement, une composition 1 selon l'invention comprend divers matériaux plastiques, des agrégats et de la laine de verre issus du recyclage.

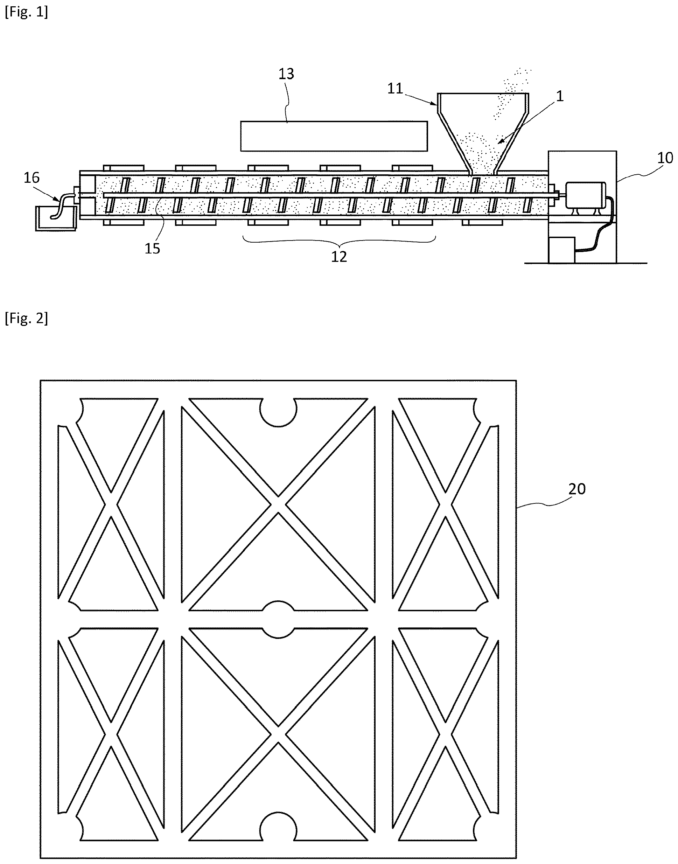

Premièrement, la composition 1 est mélangée grossièrement dans un bac prévu à cet effet. Deuxièmement, la composition 1 est introduite dans une extrudeuse 10, par exemple l'extrudeuse 10 telle qu'elle apparait à la figure 1. La composition 1 peut également être chauffée et mélangée à l'aide d'autres appareils adaptés.

Selon la forme de l'extrudeuse 10 visible à la figure 1, l'extrudeuse 10 comprend une ouverture conique 11 apte à recevoir la composition 1 mélangée au préalable et notamment une portion 12 destinée à sécher en partie les fibres contenues dans la composition 1. L'extrudeuse 10 comprend également, selon une forme de réalisation, un dispositif 13 destiné à aspirer les vapeurs émanant de la composition. Ainsi, l'extrudeuse 10 telle que représentée à la figure 1 comprend des zones de températures favorisant le mélangeage et l'assimilation de la composition 1. L'extrudeuse 10 utilisée selon cet exemple de réalisation comprend également à cet effet un mélangeur interne 15 la traversant. Enfin, l'extrudeuse 10 comprend une sortie 16 pour la composition 1 mélangée.

Après passage dans l'extrudeuse 10, la composition 1 est introduite dans un moule afin de former, par exemple, une dalle 20 illustrée à la figure 2 destinée notamment à être utilisée dans le domaine de la construction et/ ou de l'aménagement. A cet effet, la dalle 20 comprend une surface plane ou présentant des porosités et à l'opposée, visible à la figure 2, une surface plus travaillée pour augmenter sa résistance mécanique. D'autres formes de moules peuvent être utilisés selon l'utilisation du matériau souhaité. Ainsi la composition 1 selon l'invention est apte à être utilisée pour former des bordures de trottoir, des regards à grilles, des avaloirs, des parement muraux (bardage) et autres accessoires de voierie tels qu'une borne d'interdiction d'accès véhicule. Ces exemples ne sont pas exhaustifs.

Selon une forme de réalisation de l'invention, la composition 1 comprend des matériaux plastiques comprenant du Polyéthylène Basse Densité, du Polyéthylène Haute Densité et du Polypropylène, des agrégats comprenant du verre broyé et/ou du béton broyé et des fibres de laine de verre.

Différents tests sont pratiqués pour des compositions 1 selon l'invention en faisant varier les proportions. Pour ce faire, chaque composition 1 est malaxée puis extrudée et moulé pour former des dalles 20 telles que visibles à la figure 2.

Treize essais sont effectués. Les résultats issus de ces essais sont regroupés dans le Tableau 1. La résistance mécanique de chaque dalle obtenue est évaluée au regard d'une dalle obtenue à partir d'une composition semblable mais ne comprenant pas de laine de verre.

L'ouvrabilité est étudiée lors de ces tests, c'est-à-dire que l'aptitude de la composition à être malaxée et transportée dans l'extrudeuse est observée, de même que la qualité notamment l'homogénéité de la composition lors du moulage/démoulage.

Les tests de résistance mécanique comprennent notamment des tests de traction, de flexion et de cisaillement des dalles obtenues à partir des différentes compositions.

Dans le Tableau 1, le signe « plus » représente un essai réussi, le signe « moins » un essai moins probant et le signe « barre oblique » représente un essai qui a moins bien fonctionné.

**Tableau 1**

| Test n° | Composition (en pourcentage de poids de masse totale) | | | | | Ouvrabilité | | |
|---|---|---|---|---|---|---|---|---|
| | PEHD | PELD | PP | Verre broyé et/ou béton broyé | Laine de verre | Extrusion | Moulage | Résistance mécanique |
| 1 | 10 | 10 | 8 | 70 | 2 | + | + | + |
| 2 | 10 | 10 | 8 | 68 | 4 | | + | + |
| 3 | 10 | 10 | 8 | 64 | 8 | / | | + |
| 4 | 20 | 0 | 10 | 66 | 4 | | + | + |
| 5 | 20 | 0 | 10 | 64 | 6 | | | + |
| 6 | 0 | 28 | 0 | 66 | 6 | | / | / |
| 7 | 0 | 28 | 0 | 67 | 5 | | | + |
| 8 | 0 | 0 | 28 | 68 | 4 | / | / | / |
| 9 | 20 | 10 | 0 | 68 | 2 | + | + | + |
| 10 | 20 | 10 | 0 | 66 | 4 | + | + | + |
| 11 | 20 | 10 | 0 | 64 | 6 | + | + | + |
| 12 | 30 | 0 | 0 | 68 | 4 | + | + | |
| 13 | 30 | 0 | 0 | 65 | 5 | + | + | |

Selon le test n°1, la composition permet d'obtenir une dalle présentant un gain significatif de résistance mécanique par rapport à une composition sans laine de verre.

Pour le test n°2, l'extrusion s'avère difficile, la température pour obtenir une texture adéquate doit être plus augmentée, ce qui entraîne une baisse de qualité de la composition extrudée.

Lors du test n°3, l'extrudeuse est partiellement bouchée par la composition.

Pour le test n° 4, la température à atteindre est trop élevée, un début de brûlage de la composition est observé.

Lors du test n°5, la température à atteindre est trop élevée, un début de brûlage est observé et l'étape de moulage n'est pas optimale.

Pour le test n° 6, le débit pour l'extrudeuse est trop faible, la composition sous forme de pâte est trop froide en sortie et l'étape de moulage s'avère difficile.

Lors du test n°7, le débit dans l'extrudeuse est trop faible, la dalle obtenue après moulage présente des défauts.

Lors du test n° 8, l'extrudeuse se bouche.

Ces premiers essais permettent de mettre en lumière une composition 1 optimale pour la fabrication d'une dalle 20 destinée à la construction telle qu'illustrée à la figure 2. La composition 1 peut comprendre des proportions différentes selon un autre mode d'extrusion et selon les moules utilisés ensuite.

Ainsi, une composition comprenant environ 10% de PEHD en poids de masse, 10% PELD en poids de masse, 8% de PP en poids de masse, 2% de laine de verre en poids de masse et 70% de béton broyé et/ou de verre broyé en poids de masse correspond à une composition 1 optimale pour l'utilisation dans une extrudeuse 10 telle qu'elle apparaît sur la figure 1.

Pour le test n°9, la résistance mécanique est optimale par rapport à une dalle obtenue avec une composition sans fibres de laine de verre.

A l'issue du test n°10, la dalle présente également une bonne résistance mécanique.

Pour le test n°11, la dalle obtenue comprend une très bonne résistance mécanique.

Pour le test n°12, la dalle obtenue présente une souplesse plus importante.

Selon le test n°13, la dalle obtenue présente également une souplesse trop importante avec quelques fibres apparentes.

Les essais n°9 à 13 montrent que les proportions testées sont toutes valables pour obtenir une composition 1 apte à la fabrication de dalles 20 utilisables dans le domaine de la construction et/ou l'aménagement. Les tests 9, 10 et 11 présentent cependant les meilleurs résultats de résistance mécanique.

Ainsi, une composition 1 comprenant environ 20% en poids de masse de PEHD, 10% en poids de masse PELD, 0% en poids de masse de PP, entre 2 et 6% en poids de masse de laine de verre et entre 64 et 68% en poids de masse de béton broyé et/ou de verre broyé correspond à une composition 1 optimale pour l'utilisation dans une extrudeuse 10 telle qu'elle apparait sur la figure 1.

Bien entendu, diverses autres modifications peuvent être apportées à l'invention dans le cadre des revendications annexées.

## Revendications

1. Composition pour la fabrication de matériau recyclable destiné notamment à la construction et/ou à l'aménagement constitué d'un mélange de matériaux recyclés comprenant des matériaux plastiques, des agrégats et de la laine de verre.

2. Composition selon la revendication précédente, dans laquelle les matériaux plastiques comprennent du Polyéthylène Basse Densité (PELD), du Polyéthylène Haute Densité (PEHD) et les agrégats comprennent du verre broyé et/ou du béton broyé.

3. Composition selon la revendication précédente, dans laquelle les matériaux plastiques comprennent en outre du Polypropylène (PP).

4. Composition selon l'une quelconque des revendications précédentes, dans laquelle la laine de verre comprend des fibres de laine de verre de dimension inférieure à 5mm.

5. Composition selon l'une des revendications 2 à 4, dans laquelle les agrégats comprennent du verre broyé et/ou du béton broyé dont chaque morceau est de dimension inférieure à 4mm.

6. Composition selon l'une quelconque des revendications précédentes, dans laquelle le pourcentage de matériaux plastiques est compris entre 25 et 35% en poids de masse totale et le pourcentage de laine de verre est compris entre 0 et 6% en poids de masse totale.

7. Composition selon l'une des revendications 2 à 6, dans laquelle le pourcentage de Polyéthylène Basse Densité est environ de 10% en poids de masse totale, le pourcentage de Polyéthylène Haute Densité est environ de 10% en poids de masse totale, le pourcentage de Polypropylène est environ de 8% en poids de masse totale, le pourcentage béton broyé et/ou de verre broyé est environ de 70% en poids de masse totale et le pourcentage de laine de verre est environ de 2% en poids de masse totale.

8. Composition selon l'une des revendications 2 à 6, dans laquelle le pourcentage de Polyéthylène Basse Densité est environ de 20% en poids de masse totale, le pourcentage de Polyéthylène Haute Densité est environ de 10% en poids de masse totale, le pourcentage de Polypropylène est de 0% en poids de masse totale, le pourcentage béton broyé et/ou de verre broyé est compris entre 64 et 68% en poids de masse totale et le pourcentage de laine de verre est compris entre 2 et 6% en poids de masse totale.

9. Procédé de fabrication de la composition selon l'une des revendications 1 à 8 comprenant les étapes suivantes :
- Tri des matières issues du recyclage destinées à la composition,
- Broyage de la laine de verre afin d'obtenir des fibres de laine de verre de dimension inférieure à 5 mm, et
- Malaxage et séchage des matériaux plastiques et des agrégats comprenant les fibres de laine de verre.

10. Utilisation de la composition selon l'une des revendications 1 à 8 pour la fabrication de matériaux recyclés destinés à la construction et/ou à l'aménagement.
